# EUROPEAN PATENT APPLICATION

(11) **EP 3 528 221 A1**
(43) Date of publication of application: **21.08.2019**
(21) Application number: 18784565.6
(22) Date of filing: 12.04.2018
(51) Int. Cl.: G07F 19/00, G07F 7/08, G06Q 20/10

(54) **IC CARD-BASED TRANSACTION PROCESSING AND CREDIT PAYMENT AUTHORIZATION METHOD, DEVICE AND SYSTEM**

(30) Priority: 13.04.2017 CN 201710239908
(71) Applicant: Alibaba Group Holding Limited, Grand Cayman (KY)
(72) Inventor: CHEN, Xing, Hangzhou Zhejiang 311121 (CN); XIU, Chao, Hangzhou Zhejiang 311121 (CN); SHEN, Lingnan, Hangzhou Zhejiang 311121 (CN); LIU, Yanghui, Hangzhou Zhejiang 311121 (CN); CHEN, Ge, Hangzhou Zhejiang 311121 (CN)
(74) Representative: Conroy, John
(86) International application number: PCT/CN2018/082772
(87) International publication number: WO 2018/188624

(57) **Abstract**

The present application provides an IC card-based transaction processing and credit payment authorization method and device, where the transaction processing method includes: after a card reading terminal device detects an IC card, if it is determined that the IC card satisfies a credit payment condition, determining, by the card reading terminal device, that a current transaction is completed, and recording related information of the current transaction; generating, by a server of an IC card issuer, a deduction request that includes the related information of the current transaction, and sending the deduction request to a credit authorizer, where the credit authorizer registers a payment account of an IC card holder in advance; and performing, by the credit authorizer, a deduction operation on the payment account of the IC card holder based on the deduction request, and performing settlement with the IC card issuer for the current transaction after the deduction succeeds. In implementations, credit payment is used for the IC card during transaction, and the user does not need to recharge the IC card in advance. For the IC card issuer, processing of a service related to recharging can be reduced, and management efficiency of the IC card is significantly improved.

## Description

### TECHNICAL FIELD

The present application relates to the field of IC card technologies, and in particular, to an IC card-based transaction processing and credit payment authorization method, device, and system.

### BACKGROUND

Currently, IC cards such as a bus card and a fuel card are frequently used in daily life. When a user needs to use an IC card to perform a transaction, the user can swipe the IC card at a card reading terminal device such as a bus point of sale (POS) machine or a fuel POS machine, and the card reading terminal device can read and write storage data in the IC card, to complete a current transaction.

The previously described type of IC card is managed in a pre-paid way. On the one hand, the user needs to reload/load an amount in advance, otherwise transaction cannot be performed by using the IC card. On the other hand, before reloading/loading the amount, the user needs to perform a reload/load operation on a terminal device that has a recharging function, or the user goes to a business outlet of the IC card, and a staff of an IC card issuer performs a reload/load operation on a terminal device that has a recharging function. After the reloading/loading is performed, the IC card issuer further needs to perform an account settlement process related to recharging. Therefore, how to provide an efficient and convenient IC card management solution becomes a technical problem that needs to be urgently resolved.

### SUMMARY

In view of this, the present application provides an IC card-based transaction processing and credit payment authorization method, device, and system.

According to a first aspect of implementations of the present application, an IC card-based transaction processing method is provided, and the method includes: after a card reading terminal device of an IC card issuer detects an IC card, if it is determined that the IC card satisfies a predetermined credit payment condition, determining, by the card reading terminal device of the IC card issuer, that a current transaction is completed, recording related information of the current transaction, and sending the related information to a server of the IC card issuer; generating, by the server of the IC card issuer, a deduction request that includes the related information of the current transaction, and sending the deduction request to a credit authorizer, where the credit authorizer registers a payment account of an IC card holder in advance; and performing, by the credit authorizer, a deduction operation on the payment account of the IC card holder based on the related information of the current transaction that is included in the deduction request, and performing settlement with the IC card issuer for the current transaction after the deduction succeeds.

According to a second aspect of the implementations of the present application, a credit payment authorization method for an IC card is provided, and the method includes: obtaining, by an IC card issuer, user information of an applicant, and initiating a credit payment authorization request to a credit authorizer for the applicant, where the credit payment authorization request includes the user information of the applicant; receiving, by the credit authorizer, the credit payment authorization request, registering a payment account of the applicant based on the user information of the applicant, and sending an authorization response to the IC card issuer; and after receiving the authorization response, establishing, by the IC card issuer, a binding relationship between the user information of the applicant and related information of an IC card, to complete a credit payment authorization operation for the IC card.

According to a third aspect of the implementations of the present application, an IC card-based transaction processing method is provided, and the method includes: after an IC card is detected, if it is determined that the IC card satisfies a predetermined credit payment condition, determining that a current transaction is completed, recording related information of the current transaction, and sending the related information of the current transaction to a server of an IC card issuer, so that the IC card issuer requests a credit authorizer to perform deduction for the current transaction, and performs settlement with the credit authorizer for the current transaction.

According to a fourth aspect of the implementations of the present application, an IC card-based transaction processing method is provided, and the method includes: receiving related information of a transaction that is sent by a card reading terminal device; generating a deduction request that includes the related information of the transaction, and sending the deduction request to a credit authorizer, so that the credit authorizer performs a deduction operation on a payment account of an IC card holder based on the related information of the current transaction that is included in the deduction request; and performing settlement with an IC card issuer for the transaction.

According to a fifth aspect of the implementations of the present application, a credit payment authorization method for an IC card is provided, and the method includes: obtaining user information of an applicant, and initiating a credit payment authorization request to a credit authorizer for the applicant, where the credit payment authorization request includes the user information of the applicant, so that the credit authorizer registers a payment account of the applicant based on the user information of the applicant, and sends an authorization response to an IC card issuer; and after receiving the authorization response, establishing a binding relationship between the user information of the applicant and related information of an IC card, to complete a credit payment authorization operation for the IC card.

According to a sixth aspect of the implementations of the present application, an IC card-based transaction processing system is provided, and the system includes: a card reading terminal device of an IC card issuer, configured to determine that a current transaction is completed, record related information of the current transaction, and send the related information to a server of the IC card issuer if it is determined that an IC card satisfies a predetermined credit payment condition after the IC card is detected; the server of the IC card issuer, configured to generate a deduction request that includes the related information of the current transaction, and send the deduction request to a credit authorizer, where the credit authorizer registers a payment account of an IC card holder in advance; and a server of the credit authorizer, configured to perform a deduction operation on the payment account of the IC card holder based on the related information of the current transaction that is included in the deduction request, and perform settlement with the IC card issuer for the current transaction after the deduction succeeds.

According to a seventh aspect of the implementations of the present application, a credit payment authorization system for an IC card is provided, and the credit payment authorization system includes: a server of an IC card issuer, configured to obtain user information of an applicant, and initiate a credit payment authorization request to a credit authorizer for the applicant, where the credit payment authorization request includes the user information of the applicant; and a server of the credit authorizer, configured to receive the credit payment authorization request, register a payment account of the applicant based on the user information of the applicant, and send an authorization response to the IC card issuer, where the server of the IC card issuer is further configured to establish a binding relationship between the user information of the applicant and related information of an IC card after receiving the authorization response, to complete a credit payment authorization operation for the IC card.

According to an eighth aspect of the implementations of the present application, an IC card-based transaction processing apparatus is provided, and the apparatus includes: a transaction module, configured to determine that a current transaction is completed and record related information of the current transaction if it is determined that an IC card satisfies a predetermined credit payment condition after the IC card is detected; and a sending module, configured to send the related information of the current transaction to a server of an IC card issuer, so that the IC card issuer requests a credit authorizer to perform deduction for the current transaction, and performs settlement with the credit authorizer for the current transaction.

According to a ninth aspect of the implementations of the present application, an IC card-based transaction processing apparatus is provided, and the apparatus includes: an information receiving module, configured to receive related information of a transaction that is sent by a card reading terminal device; a deduction request module, configured to generate a deduction request that includes the related information of the transaction, and send the deduction request to a credit authorizer, so that the credit authorizer performs a deduction operation on a payment account of an IC card holder based on the related information of the current transaction that is included in the deduction request; and a settlement module, configured to perform settlement with the IC card authorizer for the transaction.

According to a tenth aspect of the implementations of the present application, a credit payment authorization apparatus for an IC card is provided, and the apparatus includes: an information acquisition module, configured to obtain user information of an applicant, and initiate a credit payment authorization request to a credit authorizer for the applicant, where the credit payment authorization request includes the user information of the applicant, so that the credit authorizer registers a payment account of the applicant based on the user information of the applicant, and sends an authorization response to an IC card issuer; and a binding module, configured to establish a binding relationship between the user information of the applicant and related information of an IC card after the IC card issuer receives the authorization response, to complete a credit payment authorization operation for the IC card.

According to an eleventh aspect of the implementation of the present application, an IC card-based transaction processing apparatus is provided, including: a processor, and a memory that is configured to store an instruction that can be executed by the processor, where the processor is configured to determine that a current transaction is completed and record related information of the current transaction if it is determined that an IC card satisfies a predetermined credit payment condition after the IC card is detected; and send the related information of the current transaction to a server of an IC card issuer, so that the IC card issuer requests a credit authorizer to perform deduction for the current transaction, and performs settlement with the credit authorizer for the current transaction.

According to a twelfth aspect of the implementation of the present application, an IC card-based transaction processing apparatus is provided, including: a processor, and a memory that is configured to store an instruction that can be executed by the processor, where the processor is configured to receive related information of a transaction that is sent by a card reading terminal device; generate a deduction request that includes the related information of the transaction, and send the deduction request to a credit authorizer, so that the credit authorizer performs a deduction operation on a payment account of an IC card holder based on the related information of the current transaction that is included in the deduction request; and perform settlement with the IC card authorizer for the transaction.

According to a thirteenth aspect of the implementation of the present application, a credit payment authorization apparatus for an IC card is provided, including: a processor, and a memory that is configured to store an instruction that can be executed by the processor, where the processor is configured to obtain user information of an applicant, and initiate a credit payment authorization request to a credit authorizer for the applicant, where the credit payment authorization request includes the user information of the applicant, so that the credit authorizer registers a payment account of the applicant based on the user information of the applicant, and sends an authorization response to an IC card issuer; and after receiving the authorization response, establish, at the IC card issuer, a binding relationship between the user information of the applicant and related information of an IC card, to complete a credit payment authorization operation for the IC card.

The technical solutions provided in the implementations of the present application have the following beneficial effects:

In the implementations of the present application, a reload/load-free IC card management solution can be provided for a user. A credit authorizer registers a payment account of the user in advance, and an IC card issuer binds the user to an IC card. When the user uses the IC card to perform a transaction, a card reading terminal device records information about the current transaction. Afterwards, the IC card issuer can perform settlement with the credit authorizer based on the transaction information. Because the credit authorizer registers the payment account of the applicant in advance, the credit authorizer can deduct transaction fees from the payment account. It can be seen that, in the implementations, credit payment is used for the IC card during the transaction, and the user does not need to recharge the IC card in advance. For the IC card issuer, processing of a service related to recharging can be reduced, and management efficiency of the IC card is significantly improved.

It should be understood that the previous general description and the following detailed description are merely examples for explanation, and do not limit the present application.

### BRIEF DESCRIPTION OF DRAWINGS

The accompanying drawings, which are incorporated in and constitute a part of the present specification, illustrate implementations consistent with the present application and, together with the specification, serve to explain the principles of the present application.
FIG. 1A is a diagram illustrating an example of an application scenario of a credit payment authorization method for an IC card, according to embodiments of the present application;
FIG. 1B is a flowchart illustrating an example of a credit payment method for an IC card, according to embodiments of the present application;
FIG. 2A is a diagram illustrating an example of an application scenario of an IC card-based transaction processing method, according to embodiments of the present application;
FIG. 2B is a flowchart illustrating an example of an IC card-based transaction processing method, according to embodiments of the present application;
FIG. 3 is a structural diagram illustrating hardware of a server in which an IC card-based transaction processing apparatus is located, according to the present application;
FIG. 4 is a block diagram illustrating an example of an IC card-based transaction processing apparatus, according to embodiments of the present application;
FIG. 5 is a block diagram illustrating an example of another IC card-based transaction processing apparatus, according to embodiments the present application;
FIG. 6 is a block diagram illustrating an example of a credit payment authorization apparatus for an IC card, according to embodiments of the present application; and
FIG. 7 is a block diagram illustrating an example of a server/electronic device in which an IC card-based transaction processing apparatus/a credit payment authorization apparatus for an IC card is located, according to embodiments of the present application.

### DESCRIPTION OF IMPLEMENTATIONS

Example implementations are described in detail here, and examples of the implementations are presented in the accompanying drawings. When the following description relates to the accompanying drawings, unless specified otherwise, same numbers in different accompanying drawings represent same or similar elements. Implementations described in the following example implementations do not represent all implementations consistent with the present application. Instead, the implementations are only examples of apparatuses and methods consistent with some aspects of the present application that are described in detail in the appended claims.

The terms used in the present application are merely for illustrating specific implementations, and are not intended to limit the present application. The terms "a" and "the" of singular forms used in the present application and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. may be used in the present application to describe various types of information, the information is not limited to the terms. These terms are only used to differentiate pieces of information of the same type. For example, without departing from the scope of the present application, first information can also be referred to as second information, and similarly, the second information can be referred to as the first information. Depending on the context, for example, the word "if' used here can be explained as "while", "when", or "in response to determining".

The implementations of the present application provide an efficient and convenient IC card management solution, and relate to a credit payment authorization solution for an IC card and an IC card-based transaction processing solution.

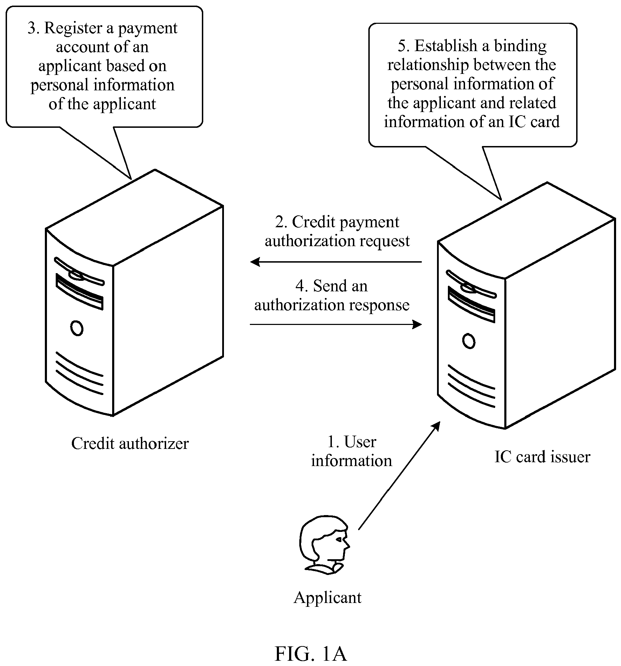

First, the credit payment authorization solution for an IC card is described. FIG. 1A is a diagram illustrating an example of an application scenario of a credit payment authorization method for an IC card, according to embodiments of the present application. In FIG. 1A, an applicant who applies for an IC card, a server configured for an IC card issuer, and a server configured for a credit authorizer are included.

An integrated circuit (IC) card is a generic term for a plastic card (usually in a size of a credit card) in which a microchip is embedded, and is also referred to as an intelligent card, a microcircuit card, a microchip card, etc. The IC card usually includes a microelectronic chip, and the IC card needs to perform data exchange by using a read/write terminal device. In some examples, an integrated circuit in the IC card usually includes an electronically erasable programmable read-only memory (EEPROM), a random access memory (RAM), a chip operating system (COS) that is fixed in a read-only memory (ROM), etc. Therefore, the IC card has a certain processing capability, and can process a certain amount of data by itself. Storage data of a memory in the card can be usually divided into an external read part and an internal processing part. Currently, the IC card is suitable for a situation in which there are a large quantity of ports and a rapid communication speed is needed. A user can complete a key function, fund settlement, attendance check, and some remote operations by using an IC card. For example, the user opens a door by using an IC card, or attending various activities such as eating, shopping, entertainment, a conference, parking, patrolling, working, and a charging service by using an IC card.

An IC card issuer is a party that issues an IC card to a user and provides various services such as an IC card charging service for the user by using the IC card. In practice, the IC card issuer usually provides a card reading terminal device, so that the user can swipe the IC card. According to a data reading/writing protocol of the IC card, the card reading terminal device can read/write storage data in the IC card when the user swipes the IC card, provide a card swiping service for the user, and record related card swiping information. The IC card issuer is usually provided with a server. The server can communicate with the card reading terminal device, to obtain the related card swiping information recorded by the card reading terminal device.

A credit authorizer is a party that performs credit authorization for a user. The credit authorizer maintains related credit data of an applicant, and records one or more payment accounts of the user. The credit authorizer can be a bank, a third-party credit institution, etc.

It is worthwhile to note that, in some examples, the IC card issuer and the credit authorizer can be two independent service parties. In other examples, the IC card issuer and the credit authorizer can be two institutions that are configured by the same service party and that provide different functions, in other words, the IC card issuer and the credit authorizer can be the same party. For example, a service party can configure an institution that dedicately provides an IC card issuance function (a dedicated server is configured to process related services such as IC card issuance, processing, or transaction, and a card reading terminal device or an issuing outlet is provided), and an institution that dedicately provides a credit authorization function (a dedicated server is configured to process related services such as credit authorization).

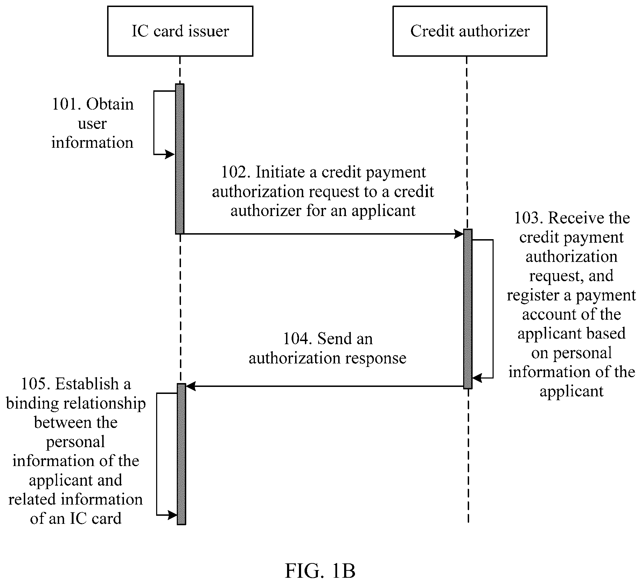

In the present implementation, when a user needs to apply for a reload/load-free IC card that can be used for credit payment, credit payment authorization can be enabled for the IC card by using the following implementation. FIG. 1B is a flowchart illustrating an example of a credit payment authorization method for an IC card, according to embodiments of the present application, and the method can include the following step 101 to step 105.

In step 101, an IC card issuer obtains user information of an applicant.

In step 102, the IC card issuer initiates a credit payment authorization request to a credit authorizer for the applicant, where the credit payment authorization request includes personal information of the applicant.

In step 103, the credit authorizer receives the credit payment authorization request, and registers a payment account of the applicant based on the personal information of the applicant.

In step 104, the credit authorizer sends an authorization response to the IC card issuer.

In step 105, after receiving the authorization response, the IC card issuer establishes a binding relationship between the personal information of the applicant and related information of an IC card, to complete a credit payment authorization operation for the IC card.

Because credit payment is involved, when applying to the IC card issuer, the user can provide personal information such as a name, an identity card number, a communication number, and a communication address of the user to the IC card issuer. Specific user information can be flexibly configured in practice. Details are not limited in the present implementation.

When issuing the IC card for the applicant, a credit status of the user needs to be determined. The IC card issuer can cooperate with one or more credit authorizers in advance, and the credit authorizer provides a credit service for the user of the IC card issuer. Specifically, a server of the IC card issuer can communicate with a server of the credit authorizer, and the server of the IC card issuer can generate the request that includes the personal information of the applicant, and send the request to the server of the credit authorizer.

Because the credit authorizer maintains user information, after receiving the credit payment authorization request, the server of the credit authorizer can query the credit status of the user by using the personal information of the user. If the credit status of the user is good, an IC card credit payment service can be provided for the applicant. The user is usually bound to one or more payment accounts on a credit authorizer side. The credit authorizer can register a payment account for the IC card by default or by using a method specified by the user. After completing the previous processing, the credit authorizer sends the authorization response to the IC card issuer, to notify the IC card issuer that credit authorization processing succeeds.

After receiving the authorization response, the IC card issuer can establish the binding relationship between the user information of the applicant and the related information of the IC card, to complete the credit payment authorization operation for the IC card. The related information of the IC card can be information such as an identifier or a card number of the IC card. The information is used to distinguish between different IC cards, and can be flexibly configured in practice. Details are not limited in the present implementation.

In practice, there may be a plurality of application scenarios of the credit payment authorization operation for the IC card. The following two scenarios are used as examples for description.

In the first scenario, the applicant buys a reload/load-free IC card that can be used for credit payment at a business outlet of the IC card.

In the present scenario, the IC card issuer can provide an electronic device at the business outlet, and the applicant can enter the user information of the applicant in the electronic device at the business outlet. Because the server of the IC card issuer needs to bind the user information of the user to the related information of the IC card, the related information of the IC card can be further entered in the electronic device. The electronic device sends the related information of the IC card and the user information to the server of the IC card issuer, to apply for the IC card for the user, and enable a credit payment function. The server of the IC card issuer can communicate with the server of the credit authorizer, and the server of the credit authorizer performs credit authorization for the user. After receiving the authorization response, the server of the IC card issuer establishes the binding relationship between the user information and the related information of the IC card, to complete the credit payment authorization operation for the IC card.

Because an existing IC card technology does not support credit payment, when the user swipes the IC card at a card reading terminal device, to make it easier for the card reading terminal device to determine that the IC card can support credit payment, in an optional implementation, a credit payment mark can be stored in a specified storage area in the IC card. By reading the mark, the card reading terminal device can rapidly determine whether the IC card can support credit payment. If the IC card cannot support credit payment, processing can be performed based on an existing transaction procedure. If the IC card supports credit payment, processing can be performed based on a credit payment procedure. The method described herein is easy to implement, and processing efficiency is relatively high.

In the second scenario, the applicant enables a credit payment function for an existing IC card technology by using an electronic device of the applicant.

In the present scenario, the electronic device can be a smartphone, a tablet computer, a wearable device, a multimedia device, etc. Client software can be installed in the electronic device, and the client software can be provided by the IC card issuer or a third party that cooperates with the IC card issuer. The electronic device can read and write the IC card in a way such as Near Field Communication (NFC) or radio frequency identification (RFID).

The user can enable the client software in the electronic device, approach or release the electronic device by using the IC card, and read, by using the electronic device in a way such as NFC or RFID, IC card-related information stored in the IC card. In another aspect, the user information of the applicant can be obtained by using the client software installed in the electronic device (in some examples, the user information can be entered when the user applies for enabling credit payment; and in some other examples, if third-party client software is used, the user may use the client software before the application, the personal information is registered on a third-party service party side corresponding to the client software, and the client software can automatically obtain the user information), and the client software can send the card information and the user information to the server of the IC card issuer. After receiving the related information of the IC card and the user information, the server of the IC card issuer can query, based on the related information of the IC card, whether credit payment can be enabled for the IC card (for example, the IC card issuer may not enable credit payment for IC cards such as a student card or a senior card, credit payment can be flexibly configured in practice, and details are not limited in the present implementation). In another aspect, the IC card issuer can initiate, by using the client software, the credit payment authorization request to the credit authorizer for the applicant, and the credit payment authorization request includes the user information, so that the credit authorizer performs credit authorization for the applicant based on the user information. Then, after receiving the authorization response, the server of the IC card issuer establishes the binding relationship between the user information and the related information of the IC card, to complete the credit payment authorization operation for the IC card.

In an optional implementation, after the establishing a binding relationship between the applicant and an IC card, the method can further include the following: The IC card issuer instructs the electronic device to enable credit payment for the IC card, and the electronic device writes the credit payment mark into the IC card.

In practice, the server of the IC card issuer can generate a card writing script and deliver the card writing script to the client software. The card writing script includes the credit payment mark. After receiving the credit payment mark, the client software writes the credit payment mark into the IC card, to enable reload/load-free credit payment for the existing IC card technology.

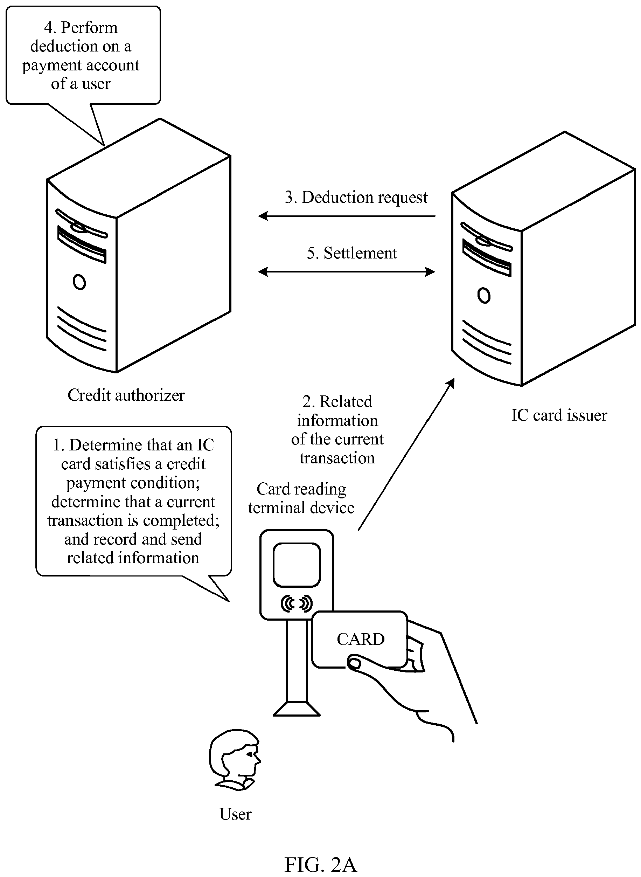

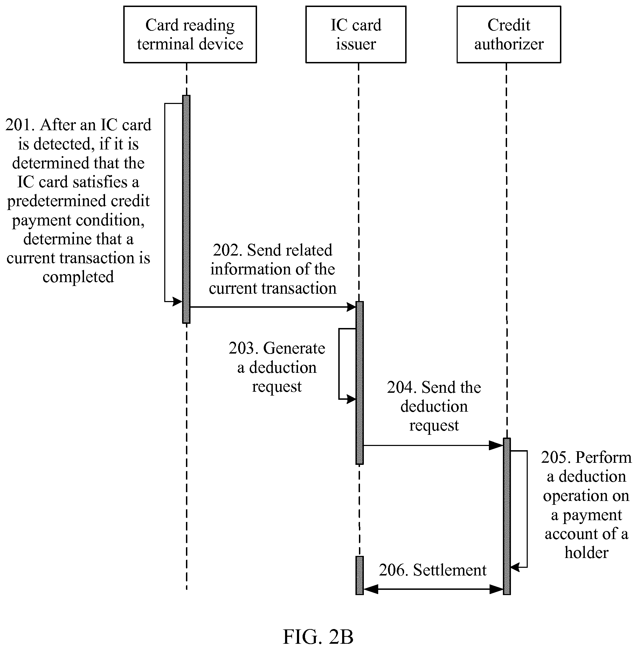

By using the previous solution, the user can use the IC card to perform credit payment. The following describes an IC card-based transaction processing process with reference to FIG. 2A and FIG. 2B. FIG. 2A shows an example of an application scenario of an IC card-based transaction processing method according to embodiments of the present application. FIG. 2B is a flowchart illustrating an example of an IC card-based transaction processing method, according to embodiments of the present application, and the method includes the following step 201 to step 206.

In step 201, after a card reading terminal device of an IC card issuer detects an IC card, if it is determined that the IC card satisfies a predetermined credit payment condition, the card reading terminal device of the IC card issuer determines that a current transaction is completed, and records related information of the current transaction.

In step 202, the IC card issuer sends the related information of the current transaction to a server of the IC card issuer.

In step 203, the server of the IC card issuer generates a deduction request that includes the related information of the current transaction.

In step 204, the server of the IC card issuer sends the deduction request to a credit authorizer, where the credit authorizer registers a payment account of an IC card holder in advance.

In step 205, the credit authorizer performs a deduction operation on the payment account of the IC card holder based on the related information of the current transaction that is included in the deduction request.

In step 206, after the deduction succeeds, the credit authorizer performs settlement with the IC card issuer for the current transaction.

In the present implementation, the user swipes the IC card at the card reading terminal device, and the card reading terminal device can detect the IC card. Because credit payment is involved, the card reading terminal device needs to determine whether the IC card satisfies the predetermined credit payment condition. Specifically, the credit payment condition can be flexibly configured based on needs, for example, the credit payment condition can be whether the IC card is within a validity period, whether the IC card is a valid card, whether the IC card supports credit payment, whether the IC card holder is a trusted user, etc. Details are not limited in the present implementation.

To more securely and rapidly determine whether the IC card satisfies the predetermined credit payment condition, in an optional implementation, the credit payment condition can include the following: The IC card supports credit payment and the IC card is the valid card.

It can be seen from the previous credit payment authorization solution for the IC card that a credit payment mark can be stored in a specified storage area in the IC card. Therefore, the determining that the IC card satisfies a predetermined credit payment condition can include: reading whether the credit payment mark is stored in the specified storage area in the IC card, and if yes, determining that the IC card supports credit payment. By reading the mark, the card reading terminal device can rapidly determine whether the IC card can support credit payment. If the IC card cannot support credit payment, processing can be performed based on an existing transaction procedure. If the IC card supports credit payment, processing can be performed based on a credit payment procedure. The method described herein is easy to implement, and processing efficiency is relatively high.

In an optional implementation, the determining whether the IC card is the valid card can be as follows: initiating a verification instruction to the IC card, and if a verification success response returned by the IC card is received, determining that the IC card is a valid card.

The verification instruction can be processed based on a predetermined data format, an encryption protocol, etc. Logic such as a corresponding data format or encryption protocol is written into a chip in the IC card in advance. If the IC card cannot perform the verification success response, the card reading terminal device can determine that the IC card is not the valid card, and the transaction fails. If the IC card is the valid card, the IC card can perform the verification success response for the verification instruction initiated by the card reading terminal device, and therefore, the card reading terminal device can determine that the IC card is the valid card, determine that the current transaction is completed, record the related information of the current transaction, and send the related information of the current transaction to the server of the IC card issuer.

To reduce development costs, the verification instruction can include a zero-consumption deduction instruction. In related technologies, a transaction process of an existing IC card technology includes a process in which a card reading terminal device initiates a deduction instruction. When the IC card is a valid card, the IC card deducts an amount in a storage area based on the deduction instruction, and performs a deduction success response after the amount is successfully deducted. In the present implementation, the verification instruction can be set to the zero-consumption deduction instruction by using an existing deduction procedure. If the IC card is the valid card, a response can be successfully performed for the zero-consumption deduction instruction, and the card reading terminal device can determine that the IC card is the valid card. An actual deduction of an amount is not involved in credit payment, and therefore, deduction fees specified in the consumption deduction instruction is RMB 0. In the present implementation, because whether the IC card is the valid card is verified by using an existing deduction procedure, development costs can be significantly reduced.

After determining that the current transaction is completed, the card reading terminal device can record the related information of the current transaction, and send the related information of the current transaction to the server of the IC card issuer periodically or in real time. The server of the IC card issuer can also generate the deduction request that includes the related information of the current transaction periodically or in real time, and send the deduction request to the credit authorizer. The credit authorizer performs the deduction operation on the payment account of the IC card holder based on the related information of the current transaction that is included in the deduction request, and after the deduction succeeds, the credit authorizer performs settlement with the IC card issuer for the current transaction. The settlement operation can be performed periodically, or can be performed in real time, and can be flexibly configured in practice. Details are not limited in the present implementation.

The following describes the IC card management solution in the present application with reference to a specific implementation.

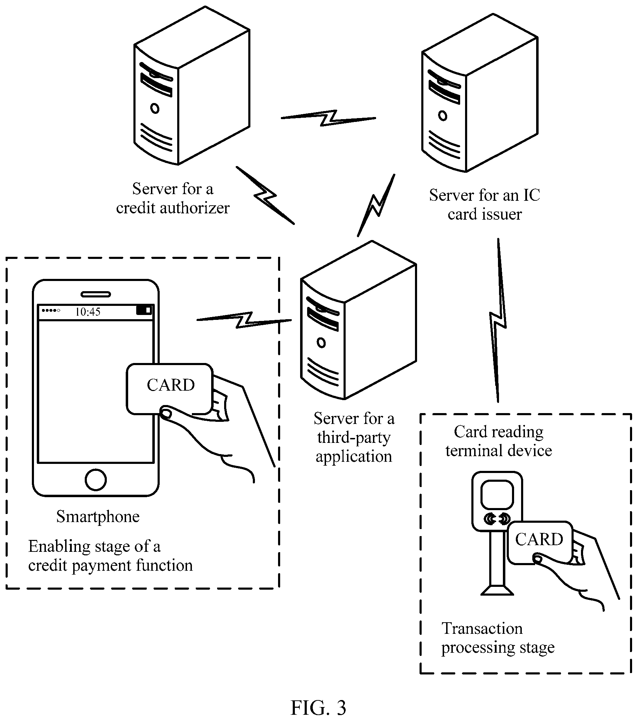

FIG. 3 is a diagram illustrating an example of an application scenario of an IC card management solution, according to embodiments of the present application. In FIG. 3, a server configured for an IC card issuer, a server configured for a credit authorizer, an IC card that belongs to an applicant and that does not have a reload/load-free credit payment function, and a smartphone of the applicant are included. The smartphone has an NFC function, and can exchange data with the IC card by using an NFC technology. In addition, a third-party payment application is installed on the smartphone. The third-party payment application cooperates with the IC card issuer and the credit authorizer, and a server corresponding to the third-party payment application can communicate with both the server of the IC card issuer and the server of the credit authorizer.

In the scenario shown in FIG. 3, the IC card management solution includes the following:

### (1) enabling a credit payment function for the existing IC card technology

The third-party payment application reads information about the IC card, and sends the information to the server of the IC card issuer by using the server corresponding to the third-party payment application. The server of the IC card issuer is responsible for querying whether the IC card supports enabling of reload/load-free credit payment (in practice, the present step may not be performed, to be specific, the credit payment function is enabled for all IC cards, or the IC card issuer may not enable the credit payment function for a student card, a senior card, etc, and specifically, the credit payment function can be flexibly configured). If the IC card does not support enabling of reload/load-free credit payment, the third-party payment application can prompt the user a reason why the credit payment function cannot be enabled. If the IC card supports enabling of reload/load-free credit payment, the server of the IC card issuer can send a credit payment authorization request to the server of the credit authorizer.

After receiving the request, the server of the credit authorizer queries a credit status of the user, and determines whether credit payment can be enabled for the user. If yes, the server of the credit authorizer can bind user information to the information about the IC card, and returns an agreement and related user information to the IC card issuer. Otherwise, the server of the credit authorizer returns a rejection reason.

If an IC card issuing institution receives rejection information from a credit authorization system, the IC card issuing institution prompts, by using the third-party payment application, the user a reason why credit payment cannot be enabled for the user. If the IC card issuer receives the returned agreement, the IC card issuer establishes a binding relationship between the information about the IC card and the user information, generate a card writing script (including the credit payment mark) used for writing the credit payment mark, and send the card writing script to the third-party payment application.

After receiving the card writing script, the third-party payment application writes the credit payment mark into the IC card. Then, an IC card holder is notified that the credit payment function is successfully enabled for the IC card. The IC card issuing institution can notify the credit authorizer that the credit payment function is successfully enabled for the IC card.

### (2) transaction processing

After the IC card approaches a card reading terminal device and the card reading terminal device successfully sensing the IC card, information such as a card number, an available amount, historical transaction information, and a credit payment mark of the IC card is read based on a predetermined data exchange protocol.

The credit payment mark is checked. If it is determined that credit payment is supported, the card reading terminal device sends a zero-consumption deduction instruction to the IC card. If the IC card successfully responds, it is determined that the deduction is completed, and the transaction is completed. The card reading terminal device records a credit transaction log. The transaction log includes information such as an actual consumption amount, a transaction date, a transaction time, a card reading terminal device number, and the card number. If credit payment is not supported, an original transaction procedure of the IC card is entered. The available amount is checked. If a balance is insufficient, the current transaction is rejected. If the balance is sufficient, a deduction amount is calculated, and the consumption deduction instruction is sent, to complete the deduction, and then, the transaction is completed.

The card reading terminal device sends the credit transaction log to the server of the IC card issuer based on needs, and the server of the IC card issuer generates a deduction request, and sends the deduction request to the credit authorizer.

The credit authorizer performs a deduction operation on a payment account of the IC card holder based on related information of the transaction that is included in the deduction request, and perform settlement with the IC card issuer for the current transaction after the deduction succeeds.

It can be seen from the previous analysis that, in the present implementation of the present application, a reload/load-free IC card management solution can be provided for a user. A credit authorizer registers a payment account of the user in advance, and an IC card issuer binds the user to an IC card. When the user uses the IC card to perform a transaction, a card reading terminal device records information about the current transaction. Afterwards, the IC card issuer can perform settlement with the credit authorizer based on the transaction information. Because the credit authorizer registers the payment account of the applicant in advance, the credit authorizer can deduct transaction fees from the payment account. It can be seen that, in the present implementation, credit payment is used for the IC card during the transaction, and the user does not need to recharge the IC card in advance. For the IC card issuer, processing of a service related to recharging can be reduced, and management efficiency of the IC card is significantly improved.

Corresponding to the previous implementations of the IC card-based transaction processing method and the credit payment authorization method for the IC card, the present application further provides implementations of an IC card-based transaction processing apparatus and system, and a credit payment authorization apparatus and the system for an IC card.

Correspondingly, the present application provides an IC card-based transaction processing system, and the system includes: a card reading terminal device of an IC card issuer, configured to determine that a current transaction is completed, record related information of the current transaction, and send the related information to a server of the IC card issuer if it is determined that an IC card satisfies a predetermined credit payment condition after the IC card is detected; the server of the IC card issuer, configured to generate a deduction request that includes the related information of the current transaction, and send the deduction request to a credit authorizer, where the credit authorizer registers a payment account of an IC card holder in advance; and a server of the credit authorizer, configured to perform a deduction operation on the payment account of the IC card holder based on the related information of the current transaction that is included in the deduction request, and perform settlement with the IC card issuer for the current transaction after the deduction succeeds.

In an optional implementation, the credit payment condition includes that the IC card supports credit payment and the IC card is a valid card.

Correspondingly, the present application provides a credit payment authorization system for an IC card, and the credit payment authorization system includes: a server of an IC card issuer, configured to obtain user information of an applicant, and initiate a credit payment authorization request to a credit authorizer for the applicant, where the credit payment authorization request includes the user information of the applicant; and a server of the credit authorizer, configured to receive the credit payment authorization request, register a payment account of the applicant based on the user information of the applicant, and send an authorization response to the IC card issuer.

The server of the IC card issuer is further configured to establish a binding relationship between the user information of the applicant and related information of an IC card after receiving the authorization response, to complete a credit payment authorization operation for the IC card.

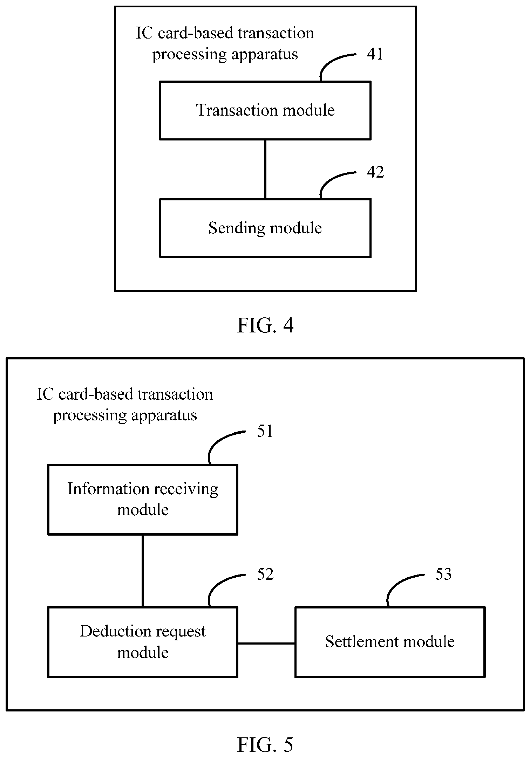

FIG. 4 is a block diagram illustrating an example of an IC card-based transaction processing apparatus, according to embodiments of the present application, and the apparatus includes: a transaction module 41, configured to determine that a current transaction is completed and record related information of the current transaction if it is determined that an IC card satisfies a predetermined credit payment condition after the IC card is detected; and a sending module 42, configured to send the related information of the current transaction to a server of an IC card issuer, so that the IC card issuer requests a credit authorizer to perform deduction for the current transaction, and performs settlement with the credit authorizer for the current transaction.

FIG. 5 is a block diagram illustrating an example of an IC card-based transaction processing apparatus, according to embodiments of the present application, and the apparatus includes: an information receiving module 51, configured to receive related information of a transaction that is sent by a card reading terminal device; a deduction request module 52, configured to generate a deduction request that includes the related information of the transaction, and send the deduction request to a credit authorizer, so that the credit authorizer performs a deduction operation on a payment account of an IC card holder based on the related information of the current transaction that is included in the deduction request; and a settlement module 53, configured to perform settlement with the IC card authorizer for the transaction.

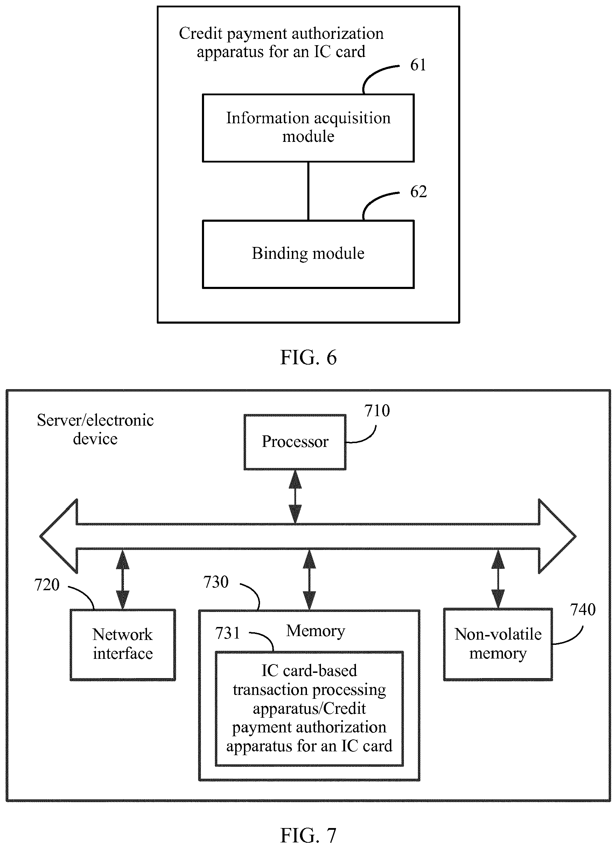

FIG. 6 is a block diagram illustrating an example of a credit payment authorization apparatus for an IC card, according to embodiments of the present application, and the apparatus includes: an information acquisition module 61, configured to obtain user information of an applicant, and initiate a credit payment authorization request to a credit authorizer for the applicant, where the credit payment authorization request includes the user information of the applicant, so that the credit authorizer registers a payment account of the applicant based on the user information of the applicant, and sends an authorization response to an IC card issuer; and a binding module 62, configured to establish a binding relationship between the user information of the applicant and related information of an IC card after the IC card issuer receives the authorization response, to complete a credit payment authorization operation for the IC card.

Correspondingly, the present application further provides an IC card-based transaction processing apparatus, including: a processor, and a memory that is configured to store an instruction that can be executed by the processor. The processor is configured to determine that a current transaction is completed and record related information of the current transaction if it is determined that an IC card satisfies a predetermined credit payment condition after the IC card is detected; and send the related information of the current transaction to a server of an IC card issuer, so that the IC card issuer requests a credit authorizer to perform deduction for the current transaction, and performs settlement with the credit authorizer for the current transaction.

In the implementations of the present application, an implementation of the IC card-based transaction processing apparatus/the credit payment authorization apparatus for an IC card can be applied to a server/electronic device. The apparatus implementation can be implemented by software, hardware, or a combination of hardware and software. Software implementation is used as an example. As a logical apparatus, the apparatus is formed by reading a corresponding computer program instruction in a non-volatile memory to a memory by a processor of a server/electronic device in which the apparatus is located. From a perspective of hardware, FIG. 7 is a structural diagram illustrating hardware of a server/electronic device in which an IC card-based transaction processing apparatus/a credit payment authorization for an IC card is located, according to the present application. In addition to a processor 710, a memory 730, a network interface 720, and a non-volatile memory 740 shown in FIG. 7, the server/electronic device in which the IC card-based transaction processing apparatus/the credit payment authorization apparatus for an IC card 731 is located in the present implementation usually includes other hardware based on actual functions of the server/electronic device. Details are omitted here for simplicity.

Correspondingly, the present application further provides an IC card-based transaction processing apparatus, including: a processor, and a memory that is configured to store an instruction that can be executed by the processor. The processor is configured to determine that a current transaction is completed and record related information of the current transaction if it is determined that an IC card satisfies a predetermined credit payment condition after the IC card is detected; and send the related information of the current transaction to a server of an IC card issuer, so that the IC card issuer requests a credit authorizer to perform deduction for the current transaction, and performs settlement with the credit authorizer for the current transaction.

Correspondingly, the present application further provides an IC card-based transaction processing apparatus, including: a processor, and a memory that is configured to store an instruction that can be executed by the processor. The processor is configured to receive related information of a transaction that is sent by a card reading terminal device; generate a deduction request that includes the related information of the transaction, and send the deduction request to a credit authorizer, so that the credit authorizer performs a deduction operation on a payment account of an IC card holder based on the related information of the current transaction that is included in the deduction request; and perform settlement with the IC card authorizer for the transaction.

Correspondingly, the present application further provides a credit payment authorization apparatus for an IC card, including: a processor, and a memory that is configured to store an instruction that can be executed by the processor. The processor is configured to obtain user information of an applicant, and initiate a credit payment authorization request to a credit authorizer for the applicant, where the credit payment authorization request includes the user information of the applicant, so that the credit authorizer registers a payment account of the applicant based on the user information of the applicant, and sends an authorization response to an IC card issuer; and after receiving the authorization response, establish, at the IC card issuer, a binding relationship between the user information of the applicant and related information of an IC card, to complete a credit payment authorization operation for the IC card.

For an implementation process of functions and roles of each module in the apparatus, references can be made to an implementation process of a corresponding step in the previously described method. Details are omitted here for simplicity.

Because an apparatus implementation basically corresponds to a method implementation, for related parts, references can be made to related descriptions in the method implementation. The previously described apparatus implementation is merely an example. The modules described as separate parts may or may not be physically separate, and parts displayed as modules may or may not be physical modules, may be located in one position, or may be distributed on a plurality of network modules. Some or all of the modules can be selected based on actual needs to achieve the objectives of the solutions in the present application. A person of ordinary skill in the art can understand and implement the implementations of the present application without creative efforts.

A person skilled in the art can easily figure out another implementation solution of the present application after thinking over the specification and practicing the present application here. The present application is intended to cover any variations, functions, or adaptive changes of the present application. These variations, functions, or adaptive changes comply with general principles of the present application, and include common knowledge or a commonly used technical means in the technical field that is not applied for in the present application. The present specification and the implementations are merely considered as examples. The actual scope and the spirit of the present application are pointed out by the following claims.

It should be understood that the present application is not limited to the accurate structures described above and shown in the accompanying drawings, and modifications and changes can be made without departing from the scope of the present application. The scope of the present application is limited only by the appended claims.

The previous descriptions are merely examples of implementations of the present application, but are not intended to limit the present application. Any modification, equivalent replacement, or improvement made without departing from the spirit and principle of the present application should fall within the protection scope of the present application.

## Claims

1. An IC card-based transaction processing method, wherein the method comprises:
in response to detecting an IC card by a card reading terminal device of an IC card issuer and determining that the IC card satisfies a predetermined credit payment condition, determining, by the card reading terminal device of the IC card issuer, that a current transaction is completed;
recording related information of the current transaction;
sending the related information to a server of the IC card issuer;
generating, by the server of the IC card issuer, a deduction request that comprises the related information of the current transaction;
sending the deduction request to a credit authorizer, wherein the credit authorizer registers a payment account of an IC card holder in advance;
performing, by the credit authorizer, a deduction operation on the payment account of the IC card holder based on the related information of the current transaction that is comprised in the deduction request; and
performing settlement with the IC card issuer for the current transaction in response to determining that the deduction succeeds.

2. The method according to claim 1, wherein the credit payment condition comprises that the IC card supports credit payment and that the IC card is a valid card.

3. The method according to claim 2, wherein the determining that the IC card satisfies a predetermined credit payment condition comprises:
determining whether a credit payment mark is stored in a specified storage area in the IC card, and
in response to determining that a credit payment mark is stored in a specified storage area in the IC card, determining that the IC card supports credit payment.

4. The method according to claim 2, wherein the determining that the IC card satisfies a predetermined credit payment condition comprises:
initiating a verification instruction to the IC card; and
in response to determining that a verification success response returned by the IC card is received, determining that the IC card is a valid card.

5. The method according to claim 4, wherein the verification instruction comprises a zero-consumption deduction instruction.

6. A credit payment authorization method for an IC card, wherein the method comprises:
obtaining, by an IC card issuer, user information of an applicant;
initiating a credit payment authorization request to a credit authorizer for the applicant, wherein the credit payment authorization request comprises the user information of the applicant;
receiving, by the credit authorizer, the credit payment authorization request;
registering a payment account of the applicant based on the user information of the applicant;
sending an authorization response to the IC card issuer; and
in response to receiving the authorization response, establishing, by the IC card issuer, a binding relationship between the user information of the applicant and related information of an IC card, to complete a credit payment authorization operation for the IC card.

7. The method according to claim 6, wherein a credit payment mark is stored in a specified storage area in the IC card.

8. The method according to claim 6 or 7, wherein the initiating, by the IC card issuer, a credit payment authorization request to a credit authorizer for the applicant comprises:
reading, by using an electronic device associated with the IC card issuer, IC card-related information stored in the IC card;
obtaining, by using client software installed in the electronic device, the user information of the applicant, wherein the client software sends the IC card-related information and the user information to the IC card issuer; and
initiating, by the IC card issuer, the credit payment authorization request to the credit authorizer for the applicant by using the client software, wherein the credit payment authorization request comprises the user information.

9. The method according to claim 8, wherein after the establishing a binding relationship between the applicant and an IC card, the method further comprises:
instructing, by the IC card issuer, the electronic device to enable credit payment for the IC card; and
writing, by the electronic device, the credit payment mark into the IC card.

10. An IC card-based transaction processing method, wherein the method comprises:
in response to detecting an IC card and determining that the IC card satisfies a predetermined credit payment condition, determining that a current transaction is completed;
recording related information of the current transaction; and
sending the related information of the current transaction to a server of an IC card issuer, so that the IC card issuer requests a credit authorizer to perform deduction for the current transaction, and performs settlement with the credit authorizer for the current transaction.

11. An IC card-based transaction processing method, wherein the method comprises:
receiving related information of a transaction that is sent by a card reading terminal device;
generating a deduction request that comprises the related information of the transaction;
sending the deduction request to a credit authorizer, so that the credit authorizer performs a deduction operation on a payment account of an IC card holder based on the related information of the current transaction that is comprised in the deduction request; and
performing settlement with an IC card issuer for the transaction.

12. A credit payment authorization method for an IC card, wherein the method comprises:
obtaining user information of an applicant;
initiating a credit payment authorization request to a credit authorizer for the applicant, wherein the credit payment authorization request comprises the user information of the applicant, so that the credit authorizer registers a payment account of the applicant based on the user information of the applicant, and sends an authorization response to an IC card issuer; and
in response to receiving the authorization response, establishing a binding relationship between the user information of the applicant and related information of an IC card, to complete a credit payment authorization operation for the IC card.

13. An IC card-based transaction processing system, wherein the system comprises:
a card reading terminal device of an IC card issuer, configured to:
determine that a current transaction is completed,
record related information of the current transaction, and
send the related information to a server of the IC card issuer in response to detecting an IC card and determining that the IC card satisfies a predetermined credit payment condition;
the server of the IC card issuer, configured to:
generate a deduction request that comprises the related information of the current transaction, and
send the deduction request to a credit authorizer, wherein the credit authorizer registers a payment account of an IC card holder in advance; and
a server of the credit authorizer, configured to:
perform a deduction operation on the payment account of the IC card holder based on the related information of the current transaction that is comprised in the deduction request, and
perform settlement with the IC card issuer for the current transaction in response to determining that the deduction succeeds.

14. The system according to claim 13, wherein the credit payment condition comprises that the IC card supports credit payment and that the IC card is a valid card.

15. A credit payment authorization system for an IC card, wherein the credit payment authorization system comprising:
a server of an IC card issuer, configured to:
obtain user information of an applicant, and
initiate a credit payment authorization request to a credit authorizer for the applicant, wherein the credit payment authorization request comprises the user information of the applicant; and
a server of the credit authorizer, configured to:
receive the credit payment authorization request;
register a payment account of the applicant based on the user information of the applicant; and
send an authorization response to the IC card issuer,
wherein the server of the IC card issuer is further configured to establish a binding relationship between the user information of the applicant and related information of an IC card in response to receiving the authorization response, to complete a credit payment authorization operation for the IC card.

16. An IC card-based transaction processing apparatus, wherein the apparatus comprises:
a transaction module, configured to determine that a current transaction is completed and record related information of the current transaction in response to detecting an IC card and determining that the IC card satisfies a predetermined credit payment condition; and
a sending module, configured to send the related information of the current transaction to a server of an IC card issuer, so that the IC card issuer requests a credit authorizer to perform deduction for the current transaction, and performs settlement with the credit authorizer for the current transaction.

17. An IC card-based transaction processing apparatus, wherein the apparatus comprises:
an information receiving module, configured to receive related information of a transaction that is sent by a card reading terminal device;
a deduction request module, configured to:
generate a deduction request that comprises the related information of the transaction; and
send the deduction request to a credit authorizer, so that the credit authorizer performs a deduction operation on a payment account of an IC card holder based on the related information of the current transaction that is comprised in the deduction request; and
a settlement module, configured to perform settlement with the IC card authorizer for the transaction.

18. A credit payment authorization apparatus for an IC card, wherein the apparatus comprising:
an information acquisition module, configured to:
obtain user information of an applicant, and
initiate a credit payment authorization request to a credit authorizer for the applicant, wherein the credit payment authorization request comprises the user information of the applicant, so that the credit authorizer registers a payment account of the applicant based on the user information of the applicant, and sends an authorization response to an IC card issuer; and
a binding module, configured to establish a binding relationship between the user information of the applicant and related information of an IC card in response to receiving the authorization response, to complete a credit payment authorization operation for the IC card.

19. An IC card-based transaction processing apparatus, comprising:
at least one processor; and
a memory, configured to store an instruction that can be executed by the at least one processor, wherein the instruction, when executed, instructs the at least one processor to:
determine that a current transaction is completed and record related information of the current transaction in response to detecting an IC card and determining that the IC card satisfies a predetermined credit payment condition; and
send the related information of the current transaction to a server of an IC card issuer, so that the IC card issuer requests a credit authorizer to perform deduction for the current transaction, and performs settlement with the credit authorizer for the current transaction.

20. An IC card-based transaction processing apparatus, comprising:
at least one processor; and
a memory, configured to store an instruction that can be executed by the at least one processor, wherein the instruction, when executed, instructs the at least one processor to:
receive related information of a transaction that is sent by a card reading terminal device;
generate a deduction request that comprises the related information of the transaction, and send the deduction request to a credit authorizer, so that the credit authorizer performs a deduction operation on a payment account of an IC card holder based on the related information of the current transaction that is comprised in the deduction request; and
perform settlement with the IC card authorizer for the transaction.

21. A credit payment authorization apparatus for an IC card, wherein the apparatus comprising:
at least one processor; and
a memory, configured to store an instruction that can be executed by the at least one processor, wherein the instruction, when executed, instructs the at least one processor to:
obtain user information of an applicant;
initiate a credit payment authorization request to a credit authorizer for the applicant, wherein the credit payment authorization request comprises the user information of the applicant, so that the credit authorizer registers a payment account of the applicant based on the user information of the applicant, and sends an authorization response to an IC card issuer; and
in response to receiving the authorization response, establish, at the IC card issuer, a binding relationship between the user information of the applicant and related information of an IC card, to complete a credit payment authorization operation for the IC card.
